# EUROPEAN PATENT APPLICATION

(11) **EP 4 036 675 A1**
(43) Date of publication of application: **03.08.2022**
(21) Application number: 21154432.5
(22) Date of filing: 29.01.2021
(51) Int. Cl.: G05B 19/418, G05B 23/02

(54) **MIXED REALITY AND VIRTUAL REALITY FOR PROCESSING ENVIRONMENTS**

(71) Applicant: BASF SE, 67056 Ludwigshafen am Rhein (DE)
(72) Inventor: Winkler, Christian-Andreas, 67056 Ludwigshafen (DE); Rudolph, Hans, 49448 Lemförde (DE); Hartmann, Michael, 49448 Lemförde (DE)
(74) Representative: Eisenführ Speiser

(57) **Abstract**

The present invention relates to a visualisation system (100) for visualising a processing of a chemical product (352, 354, 356) using at least two processing units (342, 344). The visualisation system (100) comprises a communication interface, a profiling module, and a user interface. The communication interface is configured for communicating with the processing units (342, 344) in order to receive a respective value of processing parameters used for processing of the chemical product (352, 354, 356). The profiling module is configured for providing a reference profile including a respective reference value for each of the processing parameters for a reference chemical product and for providing a profile for the chemical product (352, 354, 356). The profile includes a respective deviation value of the processing parameters for the chemical product (352, 354, 356) determined based on a difference between the respective value of the processing parameters used for processing of the chemical product (352, 354, 356) and the respective reference value. The user interface is configured for visualising information about processing the chemical product (352, 354, 356) including the profile in a mixed reality view or a virtual reality view.

## Description

### FIELD OF THE INVENTION

The present invention relates to a visualisation system for visualising a processing of a chemical product, a processing system for optimizing quality of chemical goods, a method for visualising a processing of a chemical product, and a computer program product for visualising a processing of a chemical product.

### BACKGROUND OF THE INVENTION

Visualisation systems, e.g., head-mounted display systems, allow visualisation of information, for example, in a virtual reality (VR) view or in a mixed reality (MR) view.

US 2019/0025587 A1 discloses a head-mounted eyepiece with an integrated processor for handling content for display and an integrated image source for introducing the content to an optical assembly through which the user views a surrounding environment and the displayed content, wherein the eyepiece includes event and user action control of external applications.

### SUMMARY OF THE INVENTION

It can be seen as an object of the present invention to provide a visualisation system a processing system, a method, a computer program product, and a computer-readable medium which allow an improved visualisation of processing of a chemical product.

In a first aspect of the present invention a visualisation system for visualising a processing of a chemical product using at least two processing units is presented. The visualisation system comprises a communication interface, a profiling module, and a user interface. The communication interface is configured for communicating with the processing units in order to receive a respective value of processing parameters used for processing of the chemical product. The profiling module is configured for providing a reference profile including a respective reference value for each of the processing parameters for a reference chemical product and for providing a profile for the chemical product. The profile includes a respective deviation value of the processing parameters for the chemical product determined based on a difference between the respective value of the processing parameters used for processing of the chemical product and the respective reference value. The user interface is configured for visualising information about processing the chemical product including the profile in a mixed reality (MR) view or a virtual reality (VR) view.

Providing a profile of the chemical product including the respective deviation value of the processing parameters used for processing of the chemical product allows providing an information regarding how the chemical product was processed. This information may be used for further processing the chemical product, e.g., deciding whether and/or how the chemical product is to be processed further in subsequent processing steps by further processing units. This may allow for an improved quality of the chemical product. Furthermore, rather than providing the respective values of the processing parameters, respective deviation values are provided indicating a deviation of the chemical product from a reference chemical product. This makes it easier for a user to control properties and quality of the chemical product. In other words, rather than providing to the user the values of the processing parameters, a measure of deviation from the reference profile, i.e., the deviation values, are provided, making it easier for the user to detect and potentially correct the deviation. In a chemical production or processing environment, process parameters relevant for the processing of the chemical product may be very large, which may make it hard for the user to find the information or values of the processing parameters that are dominant in terms of deviation from the reference profile. The visualisation system may also be configured for providing only deviation related information dominant for the deviation from the reference profile, making it further easier for the user to take a timely action to address the deviation.

Visualising the information about processing of the chemical product in the MR view allows improving a process for optimizing the quality of the chemical product. For example, immediate feedback where, when, and how the chemical product is adapted may be provided to a user when a value of a processing parameter is adapted resulting in an adapted deviation value of the processing parameter. This may allow to credibly assist the user in performing an optimization of the quality of the chemical product by adapting values of the processing parameter by means of a continued and/or guided human-machine interaction process, e.g., when the chemical product moves along a processing line including several processing units.

Visualising the information about processing the chemical product in the MR view or the VR view may include displaying or showing the information about processing the chemical product in the MR view or the VR view. The user interface may be configured, for example, for displaying a representation of the profile of the chemical product, such as a bar chart of the respective deviation value of the processing parameters. The representation of the profile of the chemical product may, for example, include only the respective deviation values of the processing parameters which deviate more than a respective threshold level from their reference value. In other words, deviation values that deviate less than the respective threshold level may be hidden from the representation of the profile displayed by the user interface. This may allow the user to immediately notice how the chemical product deviates from the reference chemical product. This may allow adapting one or more values of processing parameters of subsequent processing steps for compensating suboptimal processing in previous processing steps. Furthermore, an effect of an adapted value of a processing parameter may be noticed in the respective deviation value of the processing parameters.

The MR view may be an augmented reality (AR) view or an augmented virtuality (AV) view. MR view refers to every view in between reality, i.e., the real environment, and virtuality, i.e., an entirely virtual environment without any connection to the real environment. AR refers to merging virtual objects from a virtual environment, such as a hologram, into a real environment. AV refers to merging of objects from the real environment, such as processing units into a virtual environment, e.g., in form of a three-dimensional (3D) model of the processing unit. The 3D model may be provided, for example, by a 3D engine, such as a game engine, e.g., the unity game engine.

The VR view refers to a view without any connection to the real environment, i.e., it shows an entirely virtual environment. The virtual environment may be simulated. In case that the user interface shows the VR view, the visualisation system is configured for simulating the processing of the chemical product. The visualisation system may be configured for simulating the chemical product, the communication interface, the processing units, the profiling module, and the user interface. The virtual environment may be simulated by, e.g., a game engine. The game engine includes at least a rendering engine for providing graphics, and a physics engine. The visualisation system may be configured for using data from the real environment for improving the simulation of the virtual environment, e.g., based on information received from a process controller operating in the real environment. The virtual environment may comprise computer models of the processing equipment for providing realistic responses to various processing scenarios.

Visualising the information about processing of the chemical product in the VR view may allow improving safety, e.g., by improved training of users or predictions of safety critical situations. Safety critical situations may be caused, for example, by adapting values of processing parameters. For example, the chemical product may catch fire due to the adapted values of processing parameters. Such safety critical situations may be avoided due to simulating how the adapted values of the processing parameters affect the chemical product. Furthermore, users may be trained for handling safety critical situations in the virtual environment without generating a risk in the real environment. In particular, training new users in a running processing environment may not be commercially or safely feasible. In the virtual environment, new users may "try out" different responses to different processing scenarios without affecting productivity and/or quality of a running processing system in which the chemical product is processed by the processing units. Moreover, it may be desirable to familiarize the users to uncommon yet important scenarios, for example, emergency conditions or processing of certain rarely processed chemical products. Furthermore, visualising the information about processing the chemical product in the VR view may allow the users to learn better ways of addressing scenarios without or only minorly negatively affecting the processing of the chemical product.

The user interface may be configured, for example, for showing 3D models of objects in the VR view or in the MR view, e.g., the AR view or the AV view. The objects may include processing units, the chemical product, sensors, octabins, transport containers, users, or any other object of the real environment. Alternatively, or additionally, the user interface may be configured, for example, for showing real objects in the MR view. The user interface may, for example, include one or more holographic displays, stereo displays, or any other display. The user interface may furthermore include one or more input devices, e.g., image sensors for gesture recognition, a keyboard, or any other input device.

The user interface may be configured for showing information based on a display mode, such as a live mode, a quality control mode, a general property mode, a tracking mode, an energy footprint mode, an enthalpy mode, a sensor mode, a processing mode, an operator mode, a maintenance mode, an engineering mode, a documentation mode, an expert system mode, a supply chain mode, or the like. In other words, depending on the display mode used by the user interface, different information is shown. For example, a location of the object may be shown in the tracking mode or additional information of the object may be shown, for example, in the general property mode or the processing mode. The additional information may include, for example, the profile for the chemical product and processing parameters currently used by a processing unit for the processing units. The additional information shown may depend on the display mode. The user interface may be configured, for example, for displaying a movement of the chemical product in the live mode, e.g., on a 3D model.

The information shown in a respective display mode may depend on the object, i.e., different information may be shown for different objects. The information shown in the respective display mode may be adapted, for example, based on a relevance for the particular object. Different modes may also be provided for different objects, e.g., a chemical product mode, a processing unit mode, a user mode, which provide information for certain objects only.

The operator mode may include information about the chemical product, e.g., including one or more values of the processing parameters, one or more deviation values of the processing parameters, one or more quality control values of the chemical product, one or more predicted quality control values of the chemical product, one or more predicted values of performance parameters, a location of the chemical product, energy consumption used for processing the chemical product, carbon dioxide (CO₂) generated for processing the chemical product, a next location of the chemical product, a final location of the chemical product after finishing its processing, a degree of chemical reaction of the chemical product, and a potential for further chemical reactions of the chemical product. The operator mode may additionally include information about other objects, such as a robot assistant. Information about the robot assistant may include, for example, a location of the robot assistant, a next location of the robot assistant, a planned movement path of the robot assistant, a current task performed by the robot assistant, and a planned next task to be performed by the robot assistant. At least some of the values included in the operator mode may be displayed, for example, in a graphical diagram such as a bar chart.

The visualisation system may be configured for classifying the objects, e.g., the chemical product may be classified, for example, as a sample product, a trial product, or a customer product based on a quality of the chemical product. For example, different representations of the chemical product, e.g., different coloring, may be displayed based on its classification. The best quality chemical products may be classified, for example, as customer products. Chemical products with one or more deviation values above a certain threshold level may, for example, be classified as sample products. The chemical product may also be classified as sample product by chance, e.g., as a random sample for testing the quality of the chemical product. The sample products may be treated differently than the customer products, e.g., performing a different further processing, such as performing an additional quality control step.

The quality control mode may be utilized, for example, in order to control a quality of a chemical product which was classified as sample product. The quality control mode may include information about the sample product such as one or more values of the processing parameters, one or more deviation values of the processing parameters, one or more threshold values for the processing parameters of the sample product, one or more quality control values for the processing parameters, and/or a quality control result for the sample product.

The supply chain mode may be utilized, for example, for visualising logistics of the final chemical product, e.g., for packaging the chemical product for delivery to a customer. The supply chain mode may include information such as a current location of the chemical product, an amount of chemical product, a packing type, a material for packaging, a next planned location, a planned route of the chemical product, and/or a final location of the chemical product.

The maintenance mode may be used for maintaining the processing units for processing the chemical product. For example, the maintenance mode may include information about a processing system in which the processing units are included. The information about the processing system may include, for example, information about the processing units, modules, sensors, and actors of the processing system, such as type, type number, 3D models, wiring diagrams, or the like.

The user interface may be configured for providing information about the processing of the chemical product based on a selection of information chosen by a user. In other words, the information to be displayed in a certain display mode may be freely selectable by the user. This allows adapting the information to be displayed to the user in a manner which is customized exactly to the requirements of the user.

Alternatively, or additionally, the user interface may be adapted to visualise the information about processing the chemical product according to a physiology of the user. For example, displaying of the information may be adapted based on whether the user is short-sighted or long-sighted such that the user can perceive it. This allows improved displaying of the information.

A chemical product may include any chemical element or chemical material. Processing of the chemical product may include heating, cooling, pressure treatment, extruding, drawing, or any other processing. The processing parameters may include temperature, pressure, humidity, processing unit rotation speed, die opening size, energy used for processing, enthalpy, or any other processing parameter. Since energy used for processing the chemical product may be included in the profile, an energy footprint of the chemical product may be easily determined. This may allow to improve tracking energy consumption for processing the chemical product and may be used in certification.

The communication interface may be a hardware module and/or a software module. Accordingly, the communication interface may include, for example, an antenna array and a transceiver for receiving and transmitting wireless signals. Instead of an antenna array, the communication interface may also include only a single antenna. Alternatively, or additionally, the communication interface may include a wire-based connection to the processing units. The communication interface may even at least partially be an application programming interface (API).

The processing units may be, for example, extruders, mixers, ovens, mills, fridges, or any other processing units for processing the chemical product. The processing units may include one or more sensors for providing the respective value of the processing parameters. Alternatively, the respective value of a processing parameter may be determined based on a setting of a processing unit. The processing units may include a local control unit, such as a programmable logic controller (PLC). Alternatively, or additionally, one control unit may control two or more processing units, e.g., all processing units. In case that the visualisation system simulates the processing of the chemical product, a virtual control unit, e.g., a virtual PLC, may be provided by the visualisation system for controlling the processing units. This allows to provide, for example, simulated sensor signals and actor signals by the processing units in the virtual environment. In this case, for example, the virtual PLC may be used instead of a real PLC. Sensor and/or actor values may be provided by the simulated processing units of a simulated processing system to the virtual PLC instead of real sensor and/or actor values, such that the visualisation system receives the values from the virtual PLC instead of the real PLC.

The profile of the chemical product may be or may include a processing history of the chemical product indicating how the chemical product was processed in different processing steps. The processing history may include the respective value of the processing parameters used for processing the portion of the chemical product. The processing history may also include the respective deviation value of the processing parameters.

Additionally, the profile of the chemical product may include, for example, a respective value of one or more measured properties of the chemical product, a respective value of one or more predicted properties of the chemical product, or any combination thereof. The profile of the chemical product may also include, for example, a respective deviation value of one or more measured properties of the chemical product, a respective deviation value of one or more predicted properties of the chemical product, or any combination thereof. The properties of the chemical product may include, for example, a strength, a thermal resistance, a thermal conductivity, an electrical conductivity, or any other performance parameter or property, e.g., physical or chemical property of the chemical product. The visualisation system may be configured for predicting the predicted properties, for example, based on the respective value of the processing parameters, the respective value of the one or more measured properties of the chemical product, or any combination thereof.

The visualisation system may be configured for providing predictions about the chemical product, processing history, or both. The predictions about the chemical product may include, for example, predicted properties of the chemical product and/or a prediction regarding a quality of the chemical product. The predictions about the chemical product, the processing history, or both, may be included in the profile of the chemical product.

Providing a reference profile of the reference chemical product and providing the profile of the chemical product with deviation values that indicate a difference between the respective value of the processing parameters and the respective reference value allows to estimate a deviation of the chemical product from the reference chemical product. The deviation may correspond to a deviation in properties of the chemical product. The reference chemical product may be provided, for example, such that it has a desired quality, e.g., with certain predefined properties. Deviations of the properties of the chemical product compared to the properties of the reference chemical product depend on a deviation of values of processing parameters from their corresponding reference values. Reducing deviation between these values of the processing parameters of the chemical product allows to provide a more consistent quality of chemical goods including several chemical products. This may allow reducing costs for producing chemical goods since chemical products with consistent quality may be identified and mixed, e.g., combining only chemical products with sufficient quality into the final chemical goods to be shipped.

The visualisation system may be further configured for controlling a processing of the chemical product by at least one of the processing units via the communication interface based on the profile of the chemical product. This may allow improving the quality of the chemical product by directly controlling the processing. Controlling the processing of the chemical product by at least one of the processing units via the communication interface based on the profile of the chemical product may be performed automatically or manually, e.g., by a user.

The user interface may be configured for receiving inputs from a user for controlling the processing of the chemical product. User inputs may include, for example, touch commands, keystrokes, gestures, or touchless gestures depending on input methods utilized by the user interface. This allows the user to manually control the processing based on the profile of the chemical product, e.g., by adapting values of the processing parameters for subsequent processing units. This may allow optimizing the quality of the chemical product by adapting values of the processing parameters by means of a continued and/or guided human-machine interaction process.

The visualisation system may be further configured for displaying a control panel via the user interface in the MR view or the VR view. Additionally, the visualisation system may be configured for controlling the processing of the chemical product by the at least one of the processing units via the control panel. The visualisation system may be configured, for example, for adapting a value of a processing parameter via the control panel. The visualisation system may include a transceiver connected to a transceiver of a processing unit. The processing unit may be configured for performing a processing step using a value of a processing parameter. The visualisation system may be configured for adapting the value of the processing parameter used by the processing unit via the control panel. This may allow optimizing values of processing parameters by adapting values of the processing parameters and studying the effect on the chemical product based on the information provided by the profile of the chemical product. The user may study, for example, for which adapted value for which processing parameter the chemical product changes in which manner at which location. This may allow to determine why the chemical product changes and how the chemical product may be optimized for obtaining an optimal chemical product, i.e., a chemical product with optimal properties.

The profile may include values for all processing parameters. The profile may also only include a subset of the values for all processing parameters.

The profile may include a deviation value for each processing parameter for which the processing of the chemical product has been performed. In other words, the profile may depend on a current stage of processing of the chemical product. For example, if only two processing steps out of a number n of processing steps for processing of the chemical product have been performed, the profile may include only values of the processing parameters used in the two processing steps, e.g., values of two processing parameters. This allows following a processing flow of the chemical product along its processing, e.g., along a processing line including several processing units at which the chemical product is processed.

A further processing of the chemical product may be performed based on its profile. A value of a processing parameter for the n-th processing step for processing the chemical product may depend, for example, on the value of the processing parameter of one of the n-1 subsequent processing steps or on the values of the processing parameters of two or more of the n-1 subsequent processing steps. This may allow to optimize processing of the chemical product. If, for example, the chemical product was treated with a too high temperature in a n-1-th processing step and thus currently has a bad quality, further processing in the subsequent processing steps, e.g., n-th and n+1-th processing step, may be adapted to improve the quality to a better level if possible or drain out the chemical product from processing.

The visualisation system may be further configured for determining a location of the chemical product. Additionally, the visualisation system may be configured for associating the profile of the chemical product with the location of the chemical product. This may allow to provide a better overview for the user where the chemical product is processed in which manner. The visualisation system may, for example, be configured for determining the location of the chemical product based on the values of the processing parameters included in the profile. If, for example, the value of an n-1-th processing parameter for a n-1-th processing step is included in the profile, the profile module may determine that the chemical product was processed in the n-1-th processing step and is currently provided to or processed in the n-th processing step. Alternatively, or additionally, the profile module may be configured for determining the location of the chemical product based on a value of a processing speed parameter used for processing the chemical product which indicates, for example, a speed of a conveyor belt on which the chemical product is located for transferring it between different processing units for processing it. The conveyor belt itself may also be a processing unit, e.g., in which the chemical product is transported and optionally heated or cooled. Different processing units may also have different values of the processing speed parameter.

The visualisation may be further configured for displaying a representation of the profile of the chemical product at the location of the chemical product in the MR view or the VR view. For example, the user interface of the visualisation system may be configured for displaying the representation of the profile of the chemical product at the location of the chemical product in MR view. This may allow a better overview for adapting values of the processing parameters in order to optimize the quality of the chemical product. For example, the overview how the chemical product is affected by adapting values of the processing parameters may be improved.

The visualisation system may be configured for displaying, for example, the representation of the profile of the chemical product in the MR view on a processing unit which currently processes the chemical product. For example, the user interface may be configured for displaying the profile of the chemical product on the processing unit which performs a current processing step of the chemical product, e.g., in form of a hologram on a real processing unit in the AR view. The visualisation system may be configured for, e.g., visually overlaying the profile on the chemical product. This may allow following a processing flow of the chemical product. Alternatively, or additionally, the user interface may be configured for displaying the profile of the chemical product on the processing unit which performs the current processing step of the chemical product, e.g., in form of a graphical representation on a 3D model of the processing unit in the AV view.

The visualisation system may be further configured for marking of the chemical product by a flag. Marking of the chemical product may be performed based on the deviation value of at least one of the processing parameters. The visualisation system may be configured for automatically marking the chemical product by a flag, for example, based on one or more flagging rules. A flagging rule may be, for example, that the deviation value of the at least one of the processing parameters deviates more than a threshold value from a certain value of the at least one of the processing parameters, e.g., from its reference value. Another flagging rule may be, for example, that one or more deviation values of the processing parameters deviate more than a threshold value from a respective certain value of the processing parameters, e.g., from their respective reference value. Alternatively, or additionally, a user may mark the portion of the chemical product by the flag based on input via the user interface. The visualisation system may be configured, for example, for providing an information regarding whether the chemical product should be marked by a flag to the user if the flagging rule is fulfilled, e.g., if the deviation value of the at least one of the processing parameters deviates more than a threshold value from a certain value of the at least one of the processing parameters. The user may than decide whether the user wants to mark the chemical product by a flag. This may allow to flag the chemical product if it is expected to have quality issues, e.g., as it was processed with values of processing parameters above a tolerable level resulting in a bad quality chemical product. The user may be remote to the location of the chemical product marked or to be marked by the flag. This allows remote marking of the chemical product. For example, the user interface may be configured for displaying an information in form of a warning and the visualisation system may be configured for waiting for input of the user for a certain duration before taking an automatic action, e.g., marking of the chemical product with a flag or not.

The visualisation system may be configured for controlling the processing of the chemical product based on the flag. For example, the visualisation system may be configured for controlling one or more specific processing units such that they process the chemical product in a specific manner based on the flag. The visualisation system may cause one or more of the processing units, for example, to skip processing or to drain out the chemical product from processing if the chemical product is marked by the flag. This may allow, for example, reducing processing effort for providing chemical goods as chemical products which cannot achieve a desired quality by subsequent processing steps anymore may be not further processed.

The chemical product marked by the flag may be drained out of the processing automatically or manually, e.g., before packaging the chemical product or chemical goods. Since bad quality chemical products may be drained out of the processing, quality of the chemical product or chemical goods including the chemical products may be improved. The drained out chemical product may be provided to a quality control step. This may allow to determine how to further process the drained out chemical product, e.g., disposing it, reworking it, or selling it as lower quality product separately from higher quality chemical products or chemical goods.

The user interface may include a head-mounted display, e.g., one or more holographic display or stereo display, configured for adapting a visualisation of the information about the processing of the chemical product depending on a location of the user and/or an orientation of the user's head. The head-mounted display may be configured for displaying, for example, the information about the processing of the chemical product on respective objects which get into a field of view of the user depending on the location of the user and/or the orientation of the user's head. This allows the user to move around a processing building including the processing units as if the user was in a "real processing life simulation", e.g., including forecasts about chemical products, information about processing history of the chemical products, and different objects used for processing the chemical product.

In a further aspect a processing system for optimizing quality of chemical goods is presented. Each of the chemical goods includes at least two chemical products. The processing system comprises at least two processing units and the visualisation system according to at least one of the claims 1 to 9, or any embodiment of the visualisation system. The at least two processing units are configured for processing chemical products based on a respective value of processing parameters.

The chemical products may have a predetermined identical size, e.g., a predetermined length, height, and/or width. Alternatively, the chemical products may have different sizes, e.g., within a certain tolerance level. The chemical products may be, for example, slabs or packages of the chemical goods.

The processing units may include, for example, an extruder, a mixer, an oven, a mill, a fridge, or any other processing unit for processing the chemical products.

The at least two processing units of the processing system may be connected via a processing line configured for transferring the chemical products through the processing system. The processing line may include or be, for example, a conveyor belt, a beltline, or a transfer system between processing units. The processing line itself may also be a processing unit. The processing line may be operated at a specific processing speed for transferring the chemical products through the processing system. This may allow to track a current location of the chemical product based on a duration for which the chemical product is on the processing line and the specific processing speed. Furthermore, since it is known that the chemical product undergoes certain processing steps at certain times, the location of the chemical product may be determined for a certain time.

The processing system may be operated by a user via the user interface of the visualisation system in MR view, e.g., including holograms of control panels for controlling the processing units and arranged at the locations of the processing units in the real environment.

Components of the processing system may be displayed, for example, in AR view or in AV view. The components of the processing system may include the visualisation system, the processing units, parts of the visualisation system, and/or parts of the processing units. Displaying the components of the processing system in AV view may allow, for example, to improve training of new users for operating and commissioning the processing system.

Alternatively, the components of the processing system may be displayed in VR view. Displaying the components of the processing system in VR view may allow, for example, reducing costs for training of new users for operating and commissioning the processing system. If the components of the processing system are displayed in the VR view, they are simulated. The processing system may be configured for simulating the components of the processing system.

In a further aspect a method for visualising a processing of a chemical product using at least two processing units is presented. The method comprises the steps:
- receiving from the processing units a respective value of processing parameters used for processing of the chemical product,
- providing a reference profile including a respective reference value for each of the processing parameters for a reference chemical product,
- providing a profile for the chemical product, the profile including a respective deviation value of the processing parameters for the chemical product determined based on a difference between the respective value of the processing parameters used for processing of the chemical product and the respective reference value, and
- visualising information about processing the chemical product including the profile in an MR view or a VR view.

The method may be a computer implemented method. If the method is a computer implemented method, the steps of the computer implemented method may be performed by a computer system including a processor, a computer-readable medium, a user interface, and a communication interface which, for example, includes a transceiver and an antenna array. The computer system may be, for example, the visualisation system or a part of the visualisation system. Alternatively, the visualisation system may be a software system running on a computer system.

The method may further comprise one or more of the steps:
- controlling a processing of the chemical product by at least one of the processing units via the communication interface based on the profile of the chemical product,
- receiving inputs from a user for controlling the processing of the chemical product,
- displaying a control panel in the MR view or the VR view,
- controlling the processing of the chemical product by the at least one of the processing units via the control panel,
- providing that the profile includes a deviation value for each processing parameter for which the processing of the chemical product has been performed,
- determining a location of the chemical product,
- associating the profile of the chemical product with the location of the chemical product,
- displaying a representation of the profile of the chemical product at the location of the chemical product in the MR view or the VR view,
- marking of the chemical product by a flag based on the deviation value of at least one of the processing parameters,
- adapting a visualisation of the information about the processing of the chemical product depending on a location of the user and/or an orientation of the user's head, and
- optimizing a quality of a chemical product by optimizing the respective deviation value of the processing parameters.

One or more of the aforementioned steps may be performed by the computer system, e.g., with the processor, the user interface, or via the communication interface, if the method is computer implemented.

In a further aspect a computer program product for visualising a processing of a chemical product using at least two processing units is presented. The computer program product comprises program code means for causing a processor to carry out the method according to claim 12 or 13, or any embodiment of the method, when the computer program product is run on the processor.

In another aspect a computer-readable medium having stored the computer program product according to claim 14 or any embodiment of the computer program product is presented.

It shall be understood that the visualisation system of claim 1, the processing system of claim 10, the method of claim 12, the computer program product of claim 14, and the computer-readable medium of claim 15 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
- Fig. 1: shows schematically and exemplarily an embodiment of a visualisation system in form of a head-mounted display eyepiece,
- Fig. 2: shows schematically and exemplarily a profile for a chemical product,
- Fig. 3: shows schematically and exemplarily a first embodiment of a processing system,
- Fig. 4: shows schematically and exemplarily a second embodiment of a processing system in an MR view provided by a head-mounted display eyepiece,
- Fig. 5: shows a schematic flow diagram of an embodiment of a method for visualising a processing of a chemical product.

### DETAILED DESCRIPTION OF EMBODIMENTS

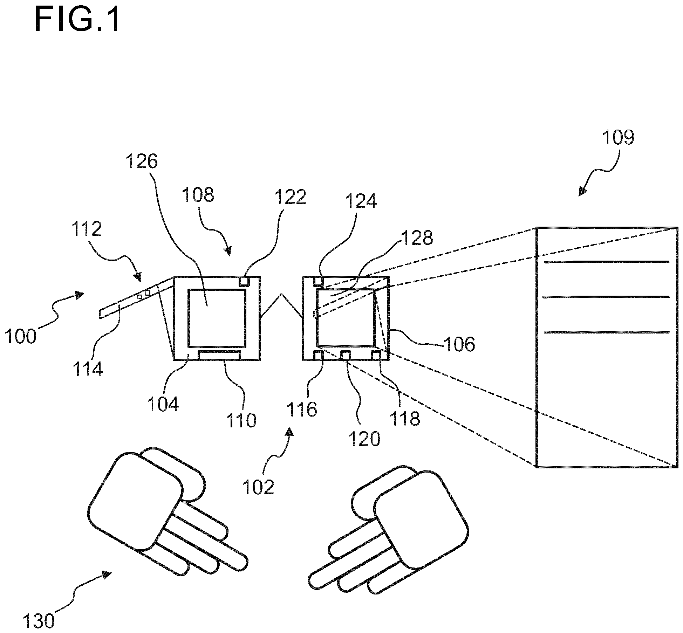

Fig. 1 shows an embodiment of the visualisation system in form of a head-mounted display eyepiece 100. In other embodiments, the visualisation system may also be a software system running on a head-mounted display eyepiece. The head-mounted display eyepiece 100 is used for visualising a processing of a chemical product. The chemical product is processed by at least two processing units. Additionally, the head-mounted display eyepiece 100 may be used for controlling the processing of the chemical product in order to optimize a quality of the chemical product and chemical goods including several chemical products. Therefore, control signals may be exchanged between the head-mounted display eyepiece 100 and the processing units.

The head-mounted display eyepiece 100 has a frame 102 formed to allow the head-mounted display eyepiece 100 to be worn on a head of a user. The frame 102 includes a communication interface 104, a control unit 106, and a user interface 108. In other embodiments, parts of the components may also be arranged outside of the frame of the head-mounted display eyepiece. In this embodiment, the head-mounted display eyepiece 100 furthermore includes an energy source in form of a battery (not shown). In other embodiments, the visualisation system may also be connected to an energy source, e.g., by wire. Additionally, the head-mounted display eyepiece 100 includes a head tracking unit (not shown). The head tracking unit includes various sensors, such as accelerometer, gyroscope, magnetometer, image sensors, or the like for tracking a position and orientation of the head of the user wearing the head-mounted display eyepiece 100.

The communication interface 104 includes a transceiver 110 and an antenna array 112. The antenna array 112 is included in temples 114 of the frame 102. In other embodiments, a single antenna may be provided instead of an antenna array and/or the antenna array may be located at or in a different part of the visualisation system.

The control unit 106 includes a processor 116 and a computer-readable medium in form of memory 118. In this embodiment, the control unit 106 additionally includes a profiling module 120, i.e., in form of a hardware module. In other embodiments, the profiling module may be a software module running in the control unit.

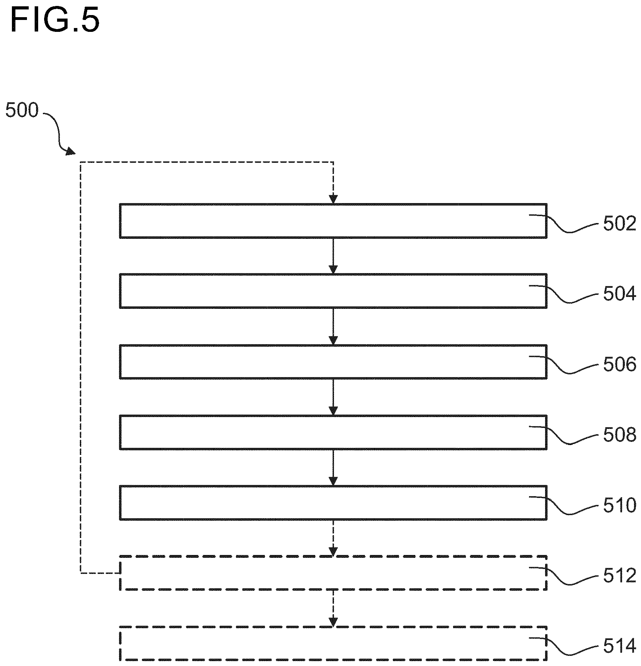

The memory 118 stores a computer program product for visualising a processing of a chemical product using at least two processing units. The computer program product includes program code means for causing processor 116 to carry out a method for visualising the processing of the chemical product, e.g., method 500 presented in Fig. 5, when the computer program product is run on the processor 116. Furthermore, the memory 118 stores reference values for a reference chemical product, values for the chemical product, and deviation values for the chemical product.

The user interface 108 includes two image sensors in form of cameras 122 and 124 and two holographic displays 126 and 128, each for one eye of the user. In this embodiment, the holographic displays 126 and 128 provide an MR view, i.e., the user can see the real environment and additionally virtual objects are displayed in the field of view (FOV) of the user. The cameras 122 and 124 record images of an environment of the head-mounted display eyepiece 100. Additionally, the head tracking unit tracks a location and orientation of the user's head. This allows the holographic displays 126 and 128 to adapt displaying of information about the processing of chemical products depending on the location of the user and an orientation of the user's head.

The user interface 108 displays a control panel 109. The control panel 109 may be overlayed over objects in the real environment, such as processing units, chemical products, or any other object. The control panel 109 may be used by the user to control processing of the chemical product. Therefore, the cameras 122 and 124 are used for recognizing gestures performed by hands 130 of the user for providing inputs to the head-mounted display eyepiece 100. For example, the user may use the hands 130 to interact with the control panel 109. In other embodiments, a different type of user interface may be used, for example, a user interface of a VR headset in which stereo displays may be used instead of holographic displays and image sensors.

In the following the functionality of the head-mounted display eyepiece 100 in a processing system 1000 is described with respect to Fig. 1, Fig. 2, and Fig. 3.

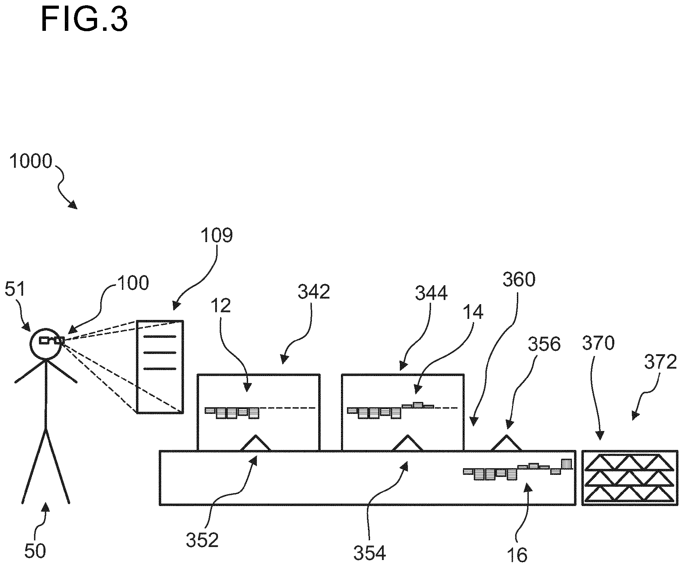

Fig. 3 shows a first embodiment of a processing system 1000 for processing chemical products. The processing system 1000 includes processing units 342 and 344, as well as a processing line 360 connecting the processing units 342 and 344. The processing units 342 and 344 process chemical products 352, 354, and 356 according to values of processing parameters. In this embodiment, the processing line 360 itself is a processing unit for transferring the chemical products 352, 354, and 356 through the processing system 1000 to an end of the processing line 360 or an outlet zone, respectively, in which the chemical products are mixed to chemical goods 370 and packaged into a transport container 372 for shipping them to a customer.

The processing system 1000 additionally includes the head-mounted display eyepiece 100 shown in more detail in Fig. 1. The head-mounted display eyepiece 100 is worn by a user 50 on the user's head 51. The head-mounted display eyepiece 100 displays profiles 12, 14, and 16 of the chemical products 352, 354, and 356 as well as the control panel 109 for controlling the processing of the chemical products 352, 354, and 356. In particular, the user 50 may adapt values of processing parameters used by the processing units 342 and 344, as well as for the processing line 360 in order to adapt properties of the chemical products 352, 354, and 356. This allows to optimize a quality of the chemical products 352, 354, and 356 and thus eventually of the chemical goods 370.

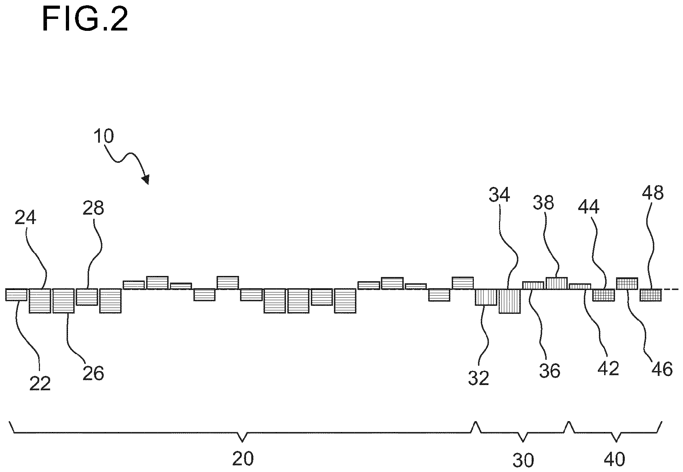

Fig. 2 shows schematically and exemplarily a profile 10 for a chemical product in more detail than profiles 12, 14, and 16 shown in Fig. 3. In this embodiment, the profile 10 is visualised in form of a bar chart. In other embodiments, other representations of the profile may be provided.

The profile 10 includes three sections 20, 30, and 40 with deviation values determined as a difference between a respective value for the chemical product and a respective reference value for the reference chemical product.

In section 20, deviation values of processing parameters for the chemical product with respect to the reference chemical product are shown. In section 30, deviation values of measured properties for the chemical product with respect to the reference chemical product are shown. In section 40, deviation values of predicted properties for the chemical product with respect to the reference chemical product are shown.

In this embodiment, inter alia, a first temperature deviation value 22, a second temperature deviation value 24, a first pressure deviation value 26, and a second pressure deviation value 28 are shown in section 20. Section 20 includes further deviation values which are not explicitly discussed. In other embodiments, further or less deviation values of the processing parameters forthe chemical product may be included in the profile forthe chemical product.

Section 30 includes a first thermal conductivity deviation value 32, a first electrical conductivity deviation value 34, a second thermal conductivity deviation value 36, and a second electrical conductivity deviation value 38. The deviation values are determined based on measured values for the measured properties and corresponding reference values for the corresponding properties of the reference chemical product. A difference is calculated between a measured value for a respective measured property and its reference value in order to determine a respective deviation value. In other embodiments, values for other measured properties may be provided, e.g., depending on what properties are desirable for the finished chemical product.

Section 40 includes a first predicted stress deviation value 42, a first predicted strain deviation value 44, a second predicted stress deviation value 46, and a predicted tensile strength deviation value 48. The predicted deviation values for the chemical product are predicted based on the measured values of the measured properties for the chemical product and corresponding reference values for the reference chemical product. In this embodiment, the predicted deviation values are determined based on equations for the predicted property which depend on the measured values and corresponding reference values. In other embodiments, values or deviation values for other predicted properties may be predicted.

The profile 10 shows a current processing stage of the chemical product, i.e., it includes the deviation values for all processing steps which have already been performed with the chemical product.

The communication interface 104 shown in Fig. 1 communicates with the processing units 342 and 344, as well as processing line 360 shown in Fig. 3 in orderto receive a respective value of processing parameters used for processing of the chemical product 352, 354, and 356.

The profiling module 120 provides a reference profile including a respective reference value for each of the processing parameters for a reference chemical product. The reference chemical product is a chemical product with desirable properties serving as a gold standard or golden chemical product for the processing of further chemical products. The reference chemical product may be selected, for example, by a user or automatically based on properties of the reference chemical product. Its reference profile includes values of processing parameters which allow to process chemical products in a manner to obtain chemical products with identical properties as the reference chemical product. However, due to different environmental effects, processing may never be performed identically and some deviation has to be expected when processing the chemical products.

The profiling module 120 therefore determines the profiles 12, 14, and 16 for the chemical product 352, 354, and 356. The profiles 12, 14, and 16 include deviation values of the processing parameters for the chemical products 352, 354, and 356 determined based on a difference between the respective value of the processing parameters used for processing of the chemical product 352, 354, and 356 and the respective reference value.

The user interface 108 shown in Fig. 1 displays the profiles 12, 14, and 16 in an MR view shown in Fig. 3. The profiles 12, 14, and 16 include a deviation value for each processing parameter for which the processing of the chemical products 352, 354, and 356 has been performed. Thus, chemical product 352 with profile 12 includes only 5 deviation values, while chemical product 354 with profile 14 includes 8 deviation values and chemical product 356 with profile 16 includes 10 deviation values. Profile 16 for the chemical product 356 shows a deviation value above a threshold deviation level, i.e., a excessive deviation. In this embodiment, the deviation value is marked by a color coding such that a user may immediately perceive the excessive deviation. Such deviations may result in bad quality products. The user may therefore decide to perform a quality control on the chemical product 356 before packaging it into the transport container 372. This may allow reducing a sampling rate as only chemical products may need to be sampled which have one or more deviation values which excessively deviate from their corresponding reference value.

In this embodiment, holograms of the profiles 12, 14, and 16 for the chemical products 352, 354, and 356 are displayed on the processing units 342 and 344, as well as on the processing line 360 in form of a bar chart at locations of the chemical products 352, 354, and 356 in the MR view. In other embodiments, the visualisation system may be configured for displaying other representations of the profiles. The user interface may also be configured for visualising further information about processing the chemical product including the profile in an MR view or a VR view. For example, in the VR view, 3D models of objects may be provided.

In order to be able to display the profiles 12, 14, and 16 at the locations of the chemical products 352, 354, and 356 to which they are associated, the head-mounted display eyepiece 100 determines a location of the chemical products 352, 354, and 356. In this embodiment, the control unit 106 determines which processing step is currently performed for which of the chemical products 352, 354, and 356. This may be easily determined from the profiles 12, 14, and 16 by looking at the values of the processing parameters currently included in the profiles 12, 14, and 16. The head-mounted display eyepiece 100 then associates the profiles 12, 14, and 16 of the chemical products 352, 354, and 356 with their corresponding locations. In other embodiments, other methods for determining the locations of the chemical products may be applied, e.g., based on a processing speed of the processing system.

The user interface 108 may be used by user 50 for controlling the processing of the chemical products 352, 354, and 356 by the processing units 342 and 344, as well as the processing line 360 via the communication interface 104 based on the profiles 12, 14, and 16 of the chemical products 352, 354, and 356. The user 50 may provide inputs into the user interface 108 for controlling the processing of the chemical products 352, 354, and 356.

In this embodiment, the head-mounted display eyepiece 100 displays the control panel 109 via the user interface 108 in the MR view. In other embodiments, the control panel may be displayed in the VR view. The head-mounted display eyepiece 100 controls the processing of the chemical products 352, 354, and 356 by the processing units 342 and 344, as well as the processing line 360 via the control panel 109. Therefore, values of the processing parameters used by the processing units 342 and 344, as well as the processing line 360 may be adapted by the user 50 via the control panel 109. In other embodiments, values of the processing parameters used by the processing units may be adapted automatically.

The user 50 can see an immediate effect on the deviation values of the chemical products 352, 354, and 356 when the user 50 adapts the values of the processing parameters used by the processing units 342 and 344, as well as of the processing line 360. This may allow improving quality of the chemical products. In particular, the processing of the chemical products may be performed based on their profile, e.g., such that processing in subsequent processing steps depends on the previous deviation values. For example, a chemical product which excessively deviates from the reference chemical product may be processed in a manner to compensate the deviation or processing may be stopped if a sufficient quality is not achievable anymore. This may also allow reducing processing effort.

Deviation values which deviate more than a certain threshold level from the reference value, i.e., excessively deviating deviation values, may be marked, e.g., by a different coloring than the other deviation values of the processing parameters. This may allow to easily identify values of processing parameters which may cause a bad quality chemical product.

In other embodiments, the visualisation system may mark the chemical product by a flag based on the deviation value of at least one of the processing parameters. The chemical product may be processed based on the flag, e.g., it may be drawn out from the processing process and/or provided to an additional quality control step.

Eventually, at an end of the processing line or outlet zone, respectively, the chemical products 352, 354, and 356 are mixed into chemical goods 370 and packaged in a transport container 372 for shipping to a customer.

In other embodiments, the processing system may be further utilized for training the user, e.g., an operator of the processing system. For example, the user may be trained in a simulated version of the processing system displayed to a user in a VR view. In the VR view, 3D models of the objects included in the processing system, such as the processing units, chemical products, and processing line may be displayed as basis for the training application. This may also allow improving a virtual commissioning process as well as safety of processing of the chemical products.

In other embodiments, the visualisation system may be operated in different display modes, displaying different information for different objects. For example, the visualisation system in form of the head-mounted display eyepiece 100 may be operated in a knowledge mode, an operator mode, a maintenance mode, or an engineering mode. The information and/or objects displayed in the respective display mode may depend on the respective display mode used.

The visualisation system, e.g., head-mounted display eyepiece 100, may also be utilized as an expert system in which information is attached to various objects of the processing system 1000 in order to provide knowledge to future users. For example, in the knowledge mode, information about how certain tasks may be performed, may be attached at a respective location where the task may be performed. At the outlet zone of the processing system, for example, an information, such as a video, may be attached for cutting out the chemical product, e.g., in form of a slab.

In the maintenance mode, for example, before a user dismounts an object, information about dismounting may be provided to the user, e.g., in form of a video at the location of the object to be dismounted.

In an engineering mode, 3D models may be overlayed over the real environment, e.g., showing objects which may not be observable in the real environment as they are, for example, behind a wall or beneath a floor. This may allow adjusting configurations of the objects and may allow optimizing, e.g., operation of the processing system.

The visualisation system, e.g., in form of head-mounted display eyepiece 100, may also be utilized for warehouse management or supply chain management in which movement paths to replacement parts are displayed in case that a part of the processing system needs to be replaced for maintaining its operation.

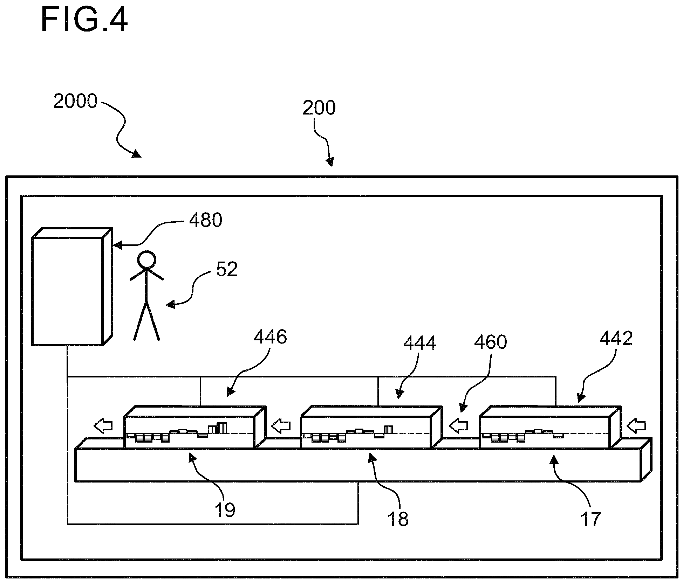

Fig. 4 shows a second embodiment of a processing system 2000 for visualising a processing of chemical products (not shown) in a VR view based on 3D models. The processing system 2000 is shown in a view through a head-mounted display eyepiece 200 in which a virtual processing environment is simulated. The head-mounted display eyepiece 200 is similar to the head-mounted display eyepiece 100 shown in Fig. 1. In contrast to the head-mounted display eyepiece 100, the head-mounted display eyepiece 200 is a VR headset utilizing stereoscopic displays instead of holographic technology. In other embodiments, the processing system may visualise the processing of the chemical products in an MR view in which the real environment is overlayed with 3D models of objects included in the real environment.

The processing system 2000 includes processing units 442, 444, and 446 as well as a processing line 460 connecting the processing units 442, 444, and 446. The processing units 442, 444, and 446, as well as the processing line 460 are controlled by a control unit 480 operated by a virtual user 52. Additionally, the head-mounted display eyepiece 200 may be utilized for controlling the processing units 442, 444, and 446, as well as the processing line 460. Therefore, the head-mounted display eyepiece 200 may send control commands to the control unit 480.

Profiles 17, 18, and 19 of three chemical products in three different processing stages allow the user to easily identify reasons for bad quality of the chemical products. In particular, the chemical products in processing units 444 and 446 show deviation values which are above a threshold deviation level with a different color coding indicating bad quality of the chemical products. This allows a user to easily identify potentially problematic chemical products which may require further attention of the user, e.g., operator of the processing system 2000.

Providing the profiles 17, 18, and 19 of the chemical products allows to increase user know how about processing of the chemical products. The user may immediately perceive where, when, and how a chemical product needs to be processed in order to either diminish or improve its quality. Therefore, the user may study effects of adapting values of processing parameters such that the user perceives when, where and how the chemical products change in reaction to adapting the values of the processing parameters. Since the processing system 2000 operates in a simulated environment, adapting values of the processing parameters does not negatively affect the real environment. This allows improving safety of processing of chemical products as emergency situations in the real environment may be avoided, such as chemical products catching fire, due to adapting the values of the processing parameters in a manner that causes such an emergency situation in the virtual environment. The user may thus learn how the adapted values of the processing parameters may cause emergency situations and avoid such values of the processing parameters.

In other embodiments, a warning message may be displayed indicating that a deviation value of a chemical product excessively deviates from its corresponding reference value. This may indicate that the chemical product is of bad quality and/or that an emergency situation may be caused. The chemical product may therefore be marked by a flag. The chemical product may be further processed based on the flag. For example, the chemical product may be removed from further processing or an additional quality control step may be performed in order to determine whether the quality of the chemical product is sufficient for shipping it to a customer.

The warning message may be displayed, for example, for a predetermined time such as 10 seconds before an automatic action is taken, e.g., marking the chemical product with a flag, removing the chemical product from further processing, and/or automatically adapting values of the processing parameters which cause the excessive deviation. The user receiving the warning message may also react manually to the warning message, e.g., removing the chemical product manually, for example, by cutting it out, or performing a quality control of the chemical product.

The user may also use the head-mounted display eyepiece 200 for deciding which chemical products shall be sampled and transferred to an additional quality control step. This decision may be based on the deviation values in the profiles. The decision may be taken by a user. Alternatively, the decision may be taken automatically based on threshold deviation levels for different processing parameters and/or properties of the chemical product. This may allow an improved quality control prediction and a minimization of samples to be taken while maintaining a similar level of quality.

The processing system 2000 may allow an improved training of new users since it operates in a virtual environment. This may allow reducing cost, e.g., for training and may improve safety.

Fig. 5 shows an embodiment of a method 500 for visualising a processing of a chemical product using at least two processing units. The method may be a computer implemented method. The method may be utilized, for example, by the visualisation system in form of the head-mounted eyepiece 100 presented in Fig. 1 or the head-mounted eyepiece 200 presented in Fig. 4. The head-mounted eyepiece 100 or 200 may be worn by a user. The method 500 may be used by the user, for example, for optimizing quality of chemical goods in a processing system, such as the processing system 1000 presented in Fig. 3 or the processing system 2000 presented in Fig. 4. Chemical goods may include two or more chemical products, e.g., a mixture of the chemical products.

In step 502, a respective value of processing parameters used for processing of the chemical product is received from the processing units. In this embodiment, the values of the processing parameters are received by a head-mounted display eyepiece. A value of a respective processing parameter is received whenever a processing step is performed to the chemical product by a processing unit. The processing unit may provide a value for one or more processing parameters depending on how many different processing parameters are used by the processing unit. For example, if the processing unit is an extruder, values for processing parameters such as an extruder rotation speed, a temperature, a pressure, and a die size may be provided by the extruder. The values for the processing parameters may be determined based on sensors, e.g., pressure sensors, temperature sensors, or any other type of sensor. The values for the processing parameters may also be determined based on a setting of the processing unit.

In this embodiment, additionally a respective value of properties of the chemical product may be provided. The values may be predicted in the head-mounted display eyepiece based on the values of the processing parameters or they may be measured by the sensors of the processing unit and provided to the head-mounted display eyepiece.

In step 504, a reference profile for a reference chemical product is provided. The reference profile includes a respective reference value for each of the processing parameters used for processing the chemical product by the processing units. Additionally, the reference profile includes reference values for properties of the reference chemical product. Processing the chemical product in line with the reference profile allows to achieve a chemical product with desired values forthe properties of the chemical product. This allows providing chemical products of desired quality.

The processing units process the chemical product based on the reference profile, i.e., they use the reference values for the processing parameters to process the chemical product accordingly. However, the actual values forthe processing parameters used for processing the chemical product may deviate, e.g., due to environmental effects, such as wear and tear on the processing units, external temperature differences, or the like. This may require adapting values of the processing parameters in orderto obtain high quality chemical products and thus high quality chemical goods.

In step 506, a respective deviation value of the processing parameters for the chemical product is determined based on a difference between the respective value of the processing parameters used for processing of the chemical product and the respective reference value in order to provide a profile for the chemical product currently processed. The profile includes a respective deviation value for each processing parameter for which the processing of the chemical product has been performed. Additionally, the profile includes deviation values for properties of the chemical product compared to the reference chemical product.

In other embodiments, the method may include a step of marking of the chemical product by a flag based on the deviation value of at least one of the processing parameters. The flag may be used for deciding how the chemical product is to be further processed. For example, if the deviation value is higher than a threshold deviation value, the chemical product may be marked by a flag. The chemical product marked by the flag may, for example, be drained out of the processing or an additional quality control step may be performed for the chemical product.

In step 508, a location of the chemical product is determined. In this embodiment, it is determined for which processing parameters values are already included in the profile. The current location corresponds to a position between a processing unit which previously processed the chemical product, i.e., for which a value or values forthe processing parameters are included in the profile, and a processing unit which will process the chemical product in a next processing step, i.e., for which no value for the processing parameters is included in the profile. In other embodiments, different approaches for determining the location of the chemical product may be used, e.g., based on a processing speed of the processing units or the like.

The profile of the chemical product is then associated with the location of the chemical product,

In step 510, a representation of the profile of the chemical product is displayed at the location of the chemical product in an MR view. In this embodiment, the profile is displayed in form of a bar chart for the deviation values for the chemical product. In other embodiments, a different representation may be used. Instead of using an MR view, a VR view may be used for displaying the profile of the chemical product at the location of the chemical product.

In other embodiments, other information about processing the chemical product including the profile may be visualised in the MR view or the VR view. Furthermore, a visualisation of the information about the processing of the chemical product may be adapted depending on a location of the user and/or an orientation of the user's head.

In step 512, it is checked whether the chemical product is finished or whether it is to be further processed by a subsequent processing unit. Step 512 is optional.

If the chemical product is not further processed, step 514 is performed.

Else a control panel is displayed in the MR view. In other embodiments, the control panel may be displayed in the VR view. The control panel may also be displayed continuously. The control panel can be used by the user for controlling the processing of the chemical product by the processing units. In this embodiment, the value or values of processing parameters of the subsequent processing unit can be adapted by the user based on the profile of the chemical product in order to optimize the quality of the chemical product. The user may decide, how to adapt the value or values of the processing parameters of the subsequent processing unit in order to, for example, compensate for deviations of the chemical product to the reference chemical product in previous processing steps.

In other words, the processing of the chemical product may be controlled by at least one of the processing units, for example, via the communication interface of the head-mounted display eyepiece based on the profile of the chemical product using the control panel. Therefore, the user may provide inputs to the control panel for controlling the processing of the chemical product. Alternatively, adapting the values of the processing parameters may be performed automatically based on the profile.

The quality of the chemical product may be optimized by optimizing deviation values of the processing parameters. This is achieved by adapting the value or values of the processing parameters of the subsequent processing unit. After adapting the value or values of the processing parameters of the subsequent processing unit, steps 502 to 512 are repeated.

In step 514, the chemical product is packaged for shipping, e.g., to a customer. Chemical products with similar quality may be merged into a container, i.e., chemical products which have properties that deviate less than a threshold level in their properties from each other may be mixed in order to form chemical goods for shipping. Step 514 is optional.

In other embodiments, the chemical product may be provided to a quality control step before deciding whether the chemical product needs to be removed or may be packaged. It may also be decided, with which other chemical products a respective chemical product may be mixed.

Other variations to the disclosed embodiments can be understood and effected by those skilled in the art in practicing the claimed invention, from a study of the drawings, the disclosure, and the appended claims.

In the claims, the words "comprising" and "including" do not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a visualisation system for visualising a processing of a chemical product using at least two processing units. The visualisation system comprises a communication interface, a profiling module, and a user interface. The communication interface is configured for communicating with the processing units in order to receive a respective value of processing parameters used for processing of the chemical product. The profiling module is configured for providing a reference profile including a respective reference value for each of the processing parameters for a reference chemical product and for providing a profile for the chemical product. The profile includes a respective deviation value of the processing parameters forthe chemical product determined based on a difference between the respective value of the processing parameters used for processing of the chemical product and the respective reference value. The user interface is configured for visualising information about processing the chemical product including the profile in an MR view or a VR view.

## Claims

1. A visualisation system (100; 200) for visualising a processing of a chemical product (352, 354, 356) using at least two processing units (342, 344; 442, 444, 446), the visualisation system (100; 200) comprising:
- a communication interface (104) configured for communicating with the processing units (342, ..., 446) in order to receive a respective value of processing parameters used for processing of the chemical product (352, 354, 356),
- a profiling module (120) configured for providing a reference profile including a respective reference value for each of the processing parameters for a reference chemical product and for providing a profile (10; 12, 14, 16; 17, 18, 19) for the chemical product (352, 354, 356), the profile (10; ..., 19) including a respective deviation value (22, 24, 26, 28) of the processing parameters for the chemical product (352, 354, 356) determined based on a difference between the respective value of the processing parameters used for processing of the chemical product (352, 354, 356) and the respective reference value, and
- a user interface (108) configured for visualising information about processing the chemical product (352, 354, 356) including the profile (10; ..., 19) in a mixed reality view or a virtual reality view.

2. Visualisation system (100; 200) according to claim 1, further configured for controlling a processing of the chemical product (352, 354, 356) by at least one of the processing units (342, ..., 446) via the communication interface (104) based on the profile (10; ..., 19) of the chemical product (352, 354, 356).

3. Visualisation system (100; 200) according to claim 2, wherein the user interface (108) is configured for receiving inputs from a user (50) for controlling the processing of the chemical product (352, 354, 356).

4. Visualisation system (100; 200) according to claim 2 or 3, further configured for displaying a control panel (109) via the user interface (108) in the mixed reality view or the virtual reality view, and for controlling the processing of the chemical product (352, 354, 356) by the at least one of the processing units (342, 344) via the control panel (109).

5. Visualisation system (100; 200) according to at least one of the claims 1 to 4, wherein the profile (10; ..., 19) includes a deviation value (22, 24, 26, 28) for each processing parameter for which the processing of the chemical product (352, 354, 356) has been performed.

6. Visualisation system (100; 200) according to at least one of the claims 1 to 5, further configured for determining a location of the chemical product (352, 354, 356) and for associating the profile (12, 14, 16; 17, 18, 19) of the chemical product (352, 354, 356) with the location of the chemical product (352, 354, 356).

7. Visualisation system (100; 200) according to claim 6, further configured for displaying a representation of the profile (12, ..., 19) of the chemical product (352, 354, 356) at the location of the chemical product (352, 354, 356) in the mixed reality view or the virtual reality view.

8. Visualisation system (100; 200) according to at least one of the claims 1 to 7, further configured for marking of the chemical product (352, 354, 356) by a flag based on the deviation value (22, 24, 26, 28) of at least one of the processing parameters.

9. Visualisation system (100; 200) according to at least one of the claims 1 to 8, wherein the user interface (108) includes a head-mounted display (126, 128) configured for adapting a visualisation of the information about the processing of the chemical product (352, 354, 356) depending on a location of the user (50) and/or an orientation of the user's head (51).

10. Processing system (1000; 2000) for optimizing quality of chemical goods (360), each including at least two chemical products (352, 354, 356), comprising:
- the visualisation system (100; 200) according to at least one of the claims 1 to 9, and
- at least two processing units (342, ..., 446) for processing chemical products (352, 354, 356) based on a respective value of processing parameters.

11. Processing system (1000; 2000) according to claim 10, wherein the at least two processing units (342, ..., 446) are connected via a processing line (360; 460) configured for transferring the chemical products (352, 354, 356) through the processing system (1000; 2000).

12. Method for visualising a processing of a chemical product using at least two processing units, the method comprising the steps:
- receiving from the processing units a respective value of processing parameters used for processing of the chemical product,
- providing a reference profile including a respective reference value for each of the processing parameters for a reference chemical product,
- providing a profile for the chemical product, the profile including a respective deviation value of the processing parameters for the chemical product determined based on a difference between the respective value of the processing parameters used for processing of the chemical product and the respective reference value, and
- visualising information about processing the chemical product including the profile in a mixed reality view or a virtual reality view.

13. Method according to claim 12 further comprising one or more of the steps:
- controlling a processing of the chemical product by at least one of the processing units via the communication interface based on the profile of the chemical product,
- receiving inputs from a user for controlling the processing of the chemical product,
- displaying a control panel in the mixed reality view or the virtual reality view,
- controlling the processing of the chemical product by the at least one of the processing units via the control panel,
- providing that the profile includes a deviation value for each processing parameter for which the processing of the chemical product has been performed,
- determining a location of the chemical product,
- associating the profile of the chemical product with the location of the chemical product,
- displaying a representation of the profile of the chemical product at the location of the chemical product in the mixed reality view or the virtual reality view,
- marking of the chemical product by a flag based on the deviation value of at least one of the processing parameters,
- adapting a visualisation of the information about the processing of the chemical product depending on a location of the user and/or an orientation of the user's head, and
- optimizing a quality of a chemical product by optimizing the respective deviation value of the processing parameters.

14. Computer program product for visualising a processing of a chemical product (352, 354, 356) using at least two processing units (342, ..., 446), wherein the computer program product comprises program code means for causing a processor (116) to carry out the method according to claim 12 or 13, when the computer program product is run on the processor (116).

15. Computer-readable medium (118) having stored the computer program product of claim 14.
